# EUROPEAN PATENT APPLICATION

(11) **EP 2 667 295 A2**
(43) Date of publication of application: **27.11.2013**
(21) Application number: 13165866.8
(22) Date of filing: 29.04.2013
(51) Int. Cl.: G06F 3/0488

(54) **Methods and systems for enhancing touch screen operation in a display of an aircraft**

(30) Priority: 23.05.2012 US 201213478455
(71) Applicant: Honeywell International Inc., Morristown, NJ 07962-2245 (US)
(72) Inventor: Singer, Donald, Morristown, NJ 07962-2245 (US); Mulhall, Patrick, Morristown, NJ 07962-2245 (US)
(74) Representative: Houghton, Mark Phillip

(57) **Abstract**

A method is provided for controlling touch screen operation of a display device. The method includes: switching an operation of the touch screen to a turbulence mode based on at least one of a detection of turbulence and a user request to enter the turbulence mode. When the operation of the touch screen is in the turbulence mode, one of the following is performed: modifying a user interface, or processing touch sensor input data to determine a selection based on a turbulence processing method.

## Description

### TECHNICAL FIELD

The present disclosure generally relates to methods and systems for touch screen operation of a display, and more particularly relates to methods and systems of automatically adapting touch screen operation of a display in an aircraft.

### BACKGROUND

A touch screen is an electronic visual display that can detect the presence and location of a touch within a display area. The touch screen enables one to interact directly with what is displayed, rather than indirectly with an intermediate device such as a pointer controlled by a mouse or touchpad. Touch screen control devices include one or more sensors that detect the touch. The touch screen control devices can detect the touch based on a variety of sensing technologies including, but not limited to, resistive technologies, capacitive technologies, optical imaging technologies, and acoustic technologies.

Touch screens are used in various environments. The usability of touch screens in an aircraft environment is weighed against the occurrence of turbulence. Conventional methods of addressing turbulence issues with touch screens include providing a basic design in the user interface with set display sizes and minimum control sizes to ensure operation under all flight conditions. These methods compromise feature richness and introduces control layers and operational complexity.

Hence, there is a need for systems and methods for providing touch screen capability in an aircraft while minimizing the effects on the user interface. Other desirable features and characteristics will become apparent from the subsequent detailed description and the appended claims, taken in conjunction with the accompanying drawings and the foregoing technical field and background.

### BRIEF SUMMARY

A method is provided for controlling touch screen operation of a display device. The method includes: switching an operation of the touch screen to a turbulence mode based on at least one of a detection of turbulence and a user request to enter the turbulence mode. When the operation of the touch screen is in the turbulence mode, one of the following is performed: modifying a user interface, or processing touch sensor input data to determine a selection based on a turbulence processing method.

A control system is provided for controlling touch screen operation of a display device. The control system comprises a first module that switches an operation of the touch screen to a turbulence mode based on at least one of a detection of turbulence and a user request to enter the turbulence mode. A second module at least one of modifies a user interface and processes touch sensor input data to determine a selection based on the turbulence mode.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following figures, wherein like numerals denote like elements, and wherein:

FIG. 1 is a functional block diagram illustrating a touchscreen system for an aircraft in accordance with exemplary embodiments;

FIG. 2 is dataflow diagram illustrating a touchscreen module of the touchscreen system in accordance with exemplary embodiments; and

FIG. 3 is a flowchart illustrating a touchscreen display method that may be performed by the touchscreen module in accordance with exemplary embodiments.

### DETAILED DESCRIPTION

The following detailed description is merely exemplary in nature and is not intended to limit the disclosure or the application and uses of the disclosure. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

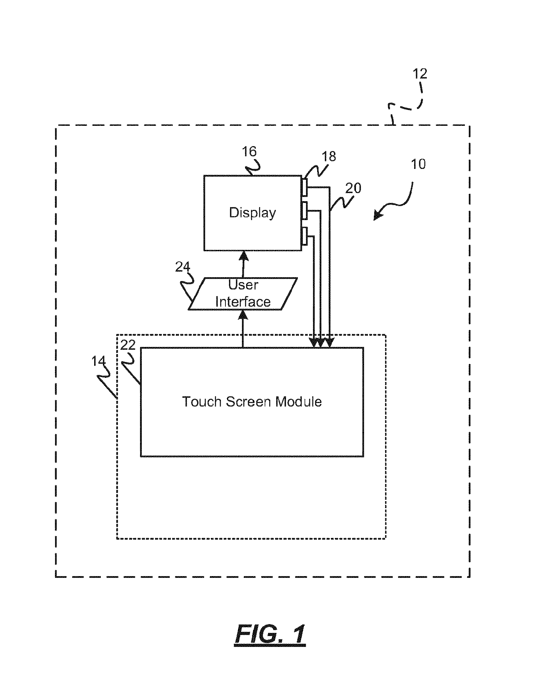

Referring now to FIG. 1, exemplary embodiments of the present disclosure are directed to an electronic touch screen system shown generally at 10 that is associated with an aircraft 12. As can be appreciated, the electronic touch screen system 10 described herein can be implemented in any aircraft 12 having onboard a computing device 14 that is associated with a display device 16, where the computing device 14 includes at least a processor, and one or more data storage devices. In various embodiments, the computing device 14 and the display device 16 may be located in a cockpit of the aircraft 12 for viewing and interaction by, for example, a pilot of the aircraft 12. In various other embodiments, the computing device 14 and/or the display device 16 may be located in another area of the aircraft 12 and may be operated by any other occupant of the aircraft 12. The computing device 14 and/or the display device 16 may also be contained within a single device.

The display device 16 is a touch screen display that includes one or more sensors 18 that detect when a force is applied to an area of a display screen. The sensors 18 generate sensor signals 20 based on the detected force. As can be appreciated, the sensors 18 can include, but are not limited to, resistive sensors, capacitor sensors, acoustic sensors, image sensors, or any other touch sensing devices. The sensor signals 20 are received by a touch screen module 22 and processed therein. As used herein, the term module refers to any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality.

In various embodiments, the touch screen module 22 determines a turbulence mode of the aircraft 12 and manages one or more user interfaces 24 based on the turbulence mode. For example, the touch screen module 22 manages the user interfaces 24 by managing the display of the user interface 24, by managing a user's interaction (i.e., selections) with the user interface 24 through the display device 16, and/or by managing an operation of functions associated with the user interface 24 based on the user's interaction.

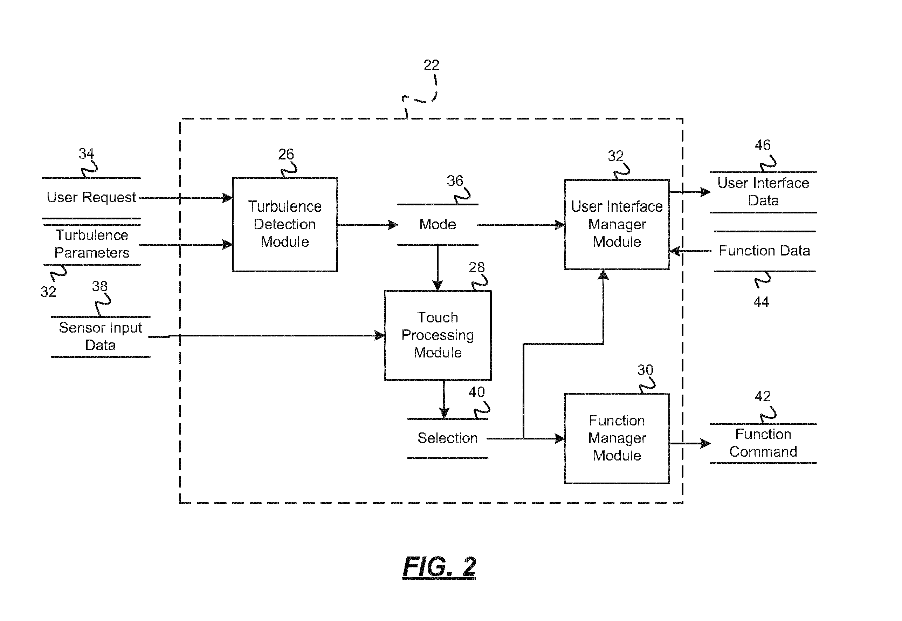

Referring now to FIG. 2, a dataflow diagram illustrates various embodiments of the touch screen module 22 of the touch screen system 10. Various embodiments of touch screen systems 10 according to the present disclosure may include any number of sub-modules embedded within the touch screen module 22. As can be appreciated, the sub-modules shown in FIG. 2 may be combined and/or further partitioned to similarly detect a turbulence mode and to manage user interfaces 24 (FIG. 1) based thereon. Inputs to the touch screen module 22 may be received from the sensors 18 (FIG. 1) or other modules (not shown), determined/modeled by other sub-modules (not shown) within the touch screen module 22, and/or may be some other form of user input that is based on a user interacting with the computing device 14. In various embodiments, the touch screen module 22 includes a turbulence detection module 26, a touch processing module 28, a function manager module 30, and a user interface manager module 32.

The turbulence detection module 26 receives as input turbulence parameters 32. The turbulence parameters 32 may include sensed or modeled parameters that may indicate an occurrence of turbulence on the aircraft 12 (FIG. 1). The turbulence detection module 26 monitors the turbulence parameters 32 to automatically detect the occurrence of turbulence on the aircraft 12 (FIG. 1). The turbulence detection module 26 sets a turbulence mode 36 based on the detection of the turbulence. For example, when turbulence is detected, the turbulence detection module 26 sets the turbulence mode 36 to indicate turbulence (e.g., to one or TRUE). In another example, when turbulence is not detected, the turbulence detection module 26 sets the turbulence mode to indicate no turbulence (e.g., to zero or FALSE).

In various embodiments, the turbulence detection module 26 receives as input a user request 34. The user request 34 may be initiated by a user interacting with the computing device 14 (FIG. 1) or the display device 16 (FIG. 1) to override the automatic detection of the turbulence and to set the turbulence mode 36 to indicate either turbulence, or no turbulence.

The touch processing module 28 receives as input the turbulence mode 36 and sensor input data 38. Based on the turbulence mode 36, the touch processing module 28 processes the sensor input data 38 to detect a selection 40 of an item (e.g., a selection box, a dropdown menu, a toggle button, etc) presented on the user interface 24 by the user. For example, when the turbulence mode 36 indicates no turbulence, the touch processing module 28 processes the sensor input data 38 according to conventional processing methods to determine the selection 40. In another example, when the turbulence mode 36 indicates turbulence, the touch processing module 28 processes the sensor input data 38 according to a turbulence touch processing method to determine the selection 40 and to ensure that the determined selection was the selection intended by the user.

In various embodiments, the turbulence touch processing methods prevent errors in the selection process by changing the physical interaction required of the user with the display device 16 (FIG. 1). For example, the turbulence touch processing methods may require more deliberate operations by the user in order to make the selection; and the turbulence touch processing methods allow for more forgiveness to inadvertent input dynamics. In various embodiments, the turbulence touch processing methods may include parameters that are adjusted for turbulence conditions. Such parameters can include, but are not limited to, recognition timers, touch areas, pressures, speeds, direction, and/or signal filters.

For example, the adjusted timers can include an increased lift-off debounce timer. Lift-off is a sensor signal that indicates a lift-off of the user's finger and the user's intent to operate that user interface's operation at the location displayed. When the user lifts off a toggle button the button activates the toggle function and displays the new state. Increasing the debounce time for lift-off delays the trailing edge to the user interface allowing the user to retouch the location if the lift-off was unintentional. Likewise after lift-off is successfully signaled a second debounce timer may be used to prevent a double tap by the user.

In various embodiments, the signal filters may include a swipe error recognition filter. Swipe gestures along the display device 16 by the user can be used for certain control actions and may require a certain speed and/or direction to be achieved. The swipe error recognition filter may include a low pass differential filter that eliminates noise errors introduced due to turbulence shaking. As can be appreciated, other turbulence touch processing methods and parameters not described are considered to be within the scope of the disclosure.

The function manager module 30 receives as input the selection 40. Based on the selection 40, the function manager module 30 determines a function to be performed. Based on the function to be performed, one or more commands 42 are generated to initiate execution of the function. The function may cause one or more aircraft operations or any other operation to be performed and/or may cause a change in the user interface 24 (FIG. 1) to be displayed.

The user interface manager module 32 receives as input the turbulence mode 36, the selection 40, and function data 44. The function data 44 may be received as a result of the execution of the function, where the function causes changes to the user interface 24 (FIG. 1). The user interface manager module 32 manages the display of user interface 24 (FIG. 1) based on the inputs. In various embodiments, the user interface manager module 32 determines the user interface to be displayed based on the selection 40 and/or the function data 44. Based on the turbulence mode 36, the user interface manager module 32 manages the display of the selected user interface by generating user interface data 46 for display by the display device 16 (FIG. 1). In various embodiments, when the turbulence mode indicates no turbulence, the user interface manager module 32 generates user interface data 46 for displaying the selected user interface in a conventional or unmodified form. When the turbulence mode 36 indicates turbulence, the user interface manager module 32 generates user interface data 46 that modifies the selected user interface such that the modified user interface has less features and/or increased feature sizes, fonts, or graphics from the unmodified or conventional user interface.

For example, graphics objects that are selectable in the user interface can be made larger in the modified user interface. Fonts or graphics associated with the selectable graphics objects can be made larger in the modified user interface. The graphics objects can be displayed as usual but can be expanded to a larger size when touched to enforce a greater slide off zone in the modified user interface. Similarly, graphic menus or other features can be increased in size, and can wrap. In another example, only those features identified as high-use or operationally required can be made available in the modified user interface. These features may also be context sensitive and based on flight phase or as part of an operational command sequence.

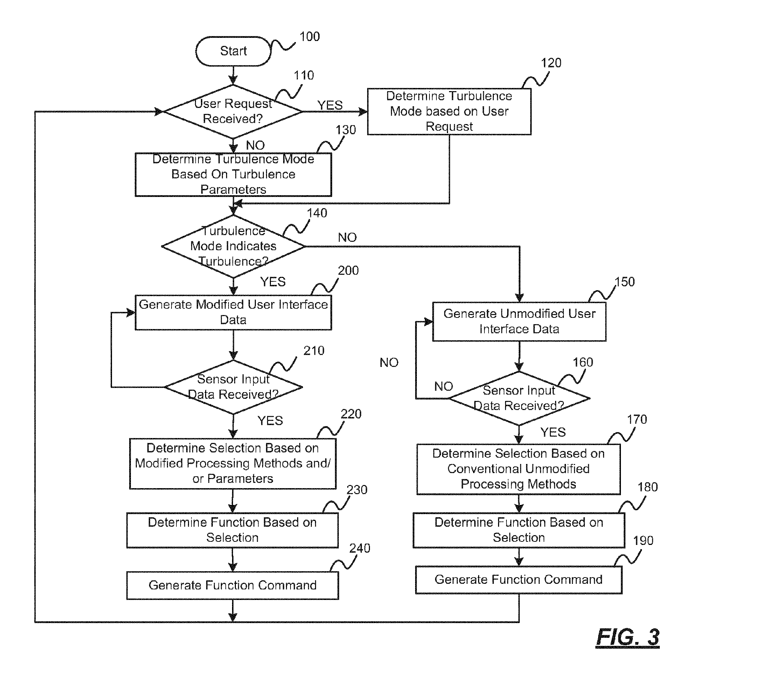

Referring now to FIG. 3, and with continued reference to FIGS. 1 and 2, a flowchart illustrates a display method that can be performed by the touch screen module 22of FIG. 2 in accordance with the present disclosure. As can be appreciated in light of the disclosure, the order of operation within the method is not limited to the sequential execution as illustrated in FIG. 3, but may be performed in one or more varying orders as applicable and in accordance with the present disclosure. As can further be appreciated, one or more steps may be added or removed from the method shown in FIG. 3, without altering the spirit of the method.

In various embodiments, the method can be scheduled to run based on predetermined events, and/or can run continually during operation of the touch screen of the display 16 (as shown).

The method may begin at 100. It is determined whether a user request 34 is received at 110. If a user request 34 pertaining to the turbulence mode 36 is received at 110, the turbulence mode 36 is set based on the user request 34 at 120. Otherwise, if the user request 34 is not received, the turbulence mode 36 is determined for example, based on the turbulence parameters 32 at 130.

The turbulence mode 36 is evaluated at 140. If the turbulence mode 36 does not indicate turbulence at 140 either by the automatic detection of no turbulence or by the user request for a selection of a non-turbulence mode, the conventional or unmodified user interface is displayed and managed according to conventional or unmodified methods at 150-190. In particular, the unmodified user interface data is generated based on functions that have been performed or previous selections made by the user, to display the unmodified user interface at 150. The unmodified user interface is displayed until sensor input data 38 indicating a touch by a user is received at 160. Once sensor input data 38 is received at 160, the sensor input data 38 is evaluated based on conventional or unmodified touch processing methods or parameters to determine the selection 40 by the user at 170. The function associated with the selection is determined at 180. One or more commands 42 are generated to cause the function to be performed at 190. Thereafter, the method continues with determining whether the user request 34 is received at 110.

If, at 140, the turbulence mode 36 indicates turbulence either by the automatic detection of turbulence or by the user request for a selection of turbulence mode, the modified user interface is displayed and managed according to modified methods at 200-240. In particular, the modified user interface data 46 is generated based on functions that have been performed or previous selections made by the user, to display the modified user interface at 200. The modified user interface is displayed until sensor input data 38 indicating a touch by a user is received at 210. Once sensor input data 38 is received at 210, the sensor input data 38 is processed based on turbulence touch processing methods or modified parameters to determine the selection 40 by the user at 220. The function associated with the selection 40 is determined at 230. One or more commands are generated to cause the function to be performed at 240. Thereafter, the method continues with determining whether the user request 34 is received at 110.

Those of skill in the art will appreciate that the various illustrative logical blocks, modules, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for controlling touch screen operation of a display device, comprising:
switching an operation of the touch screen to a turbulence mode based on at least one of a detection of turbulence and a user request to enter the turbulence mode,
wherein when the operation of the touch screen is in the turbulence mode, at least one of,
modifying a user interface, and
processing touch sensor input data to determine a selection based on a turbulence processing method.

2. The method of claim 1 wherein the detection of turbulence of an aircraft is based on sensed parameters of the aircraft.

3. The method of claim 1 further comprising:
receiving the user request; and
switching the operation of the touch screen to the turbulence mode based on the user request.

4. The method of claim 1 wherein the modifying the user interface comprises reducing features of the user interface.

5. The method of claim 4 wherein the reducing features of the user interface is based on at least one of feature priority and operational command sequence.

6. The method of claim 1 wherein the modifying the user interface comprises increasing at least one of a feature sizes, a feature font, and a feature graphic.

7. The method of claim 1 wherein the increasing the feature size comprises at least one of increasing the feature size as it is displayed and increasing the feature size when it determined that it has been touched.

8. The method of claim 1 wherein the turbulence processing methods include parameters that are adjusted for turbulence conditions.

9. The method of claim 8 wherein the parameters include at least one of recognition timers, touch areas, pressures, speeds, direction, and signal filters.

10. A control system is provided for controlling touch screen operation of a display device, comprising:
a computer readable medium comprising:
a first module that switches an operation of the touch screen to a turbulence mode based on at least one of a detection of turbulence and a user request to enter the turbulence mode; and
a second module that at least one of modifies a user interface and processes touch sensor input data to determine a selection based on the turbulence mode.
